# EUROPEAN PATENT SPECIFICATION

(11) **EP 2 069 667 B1**
(45) Date of publication and mention of the grant of the patent: **17.02.2016**
(21) Application number: 06792279.9
(22) Date of filing: 26.09.2006
(51) Int. Cl.: F16K 31/06

(54) **POPPET VALVE**
TELLERVENTIL
SOUPAPE À CHAMPIGNON

(43) Date of publication of application: 17.06.2009
(73) Proprietor: FLUID AUTOMATION SYSTEMS S.A., 1290 Versoix (CH)
(72) Inventor: ALVAREZ, Raphael, 1202 Genève (CH); SIRDEY, Pierre, 1205 Genève (CH)
(74) Representative: Gray, James
(86) International application number: PCT/EP2006/009338
(87) International publication number: WO 2008/037270

(56) References cited:
- EP-A- 0 717 219
- DE-A1- 2 718 764
- DE-A1- 4 405 657
- DE-C1- 3 241 916
- GB-A- 233 850
- JP-A- 51 082 424
- US-A- 6 161 539
- US-A1- 2003 226 993

## Description

### Background of the Invention

### 1. Field of the Invention

The present invention relates to a poppet valve.

### 2. Statement of the Problem

A poppet valve comprises one or more valve orifices and a poppet that moves both into contact with and away from the valve orifice or orifices in order to perform a valve function. The poppet valve includes an actuator that moves the poppet. A common actuator is an electromagnet. In the electromagnet actuator, electric current passing through a coil, with the coil typically formed around a core, and thereby generates a magnetic field. The magnetic field operates on an armature connected to the valve member, wherein the armature pushes the valve member to an activated position. Typically, the poppet valve includes a spring that generates a biasing force in opposition to the magnetic field. Therefore, in the absence of a magnetic field generated by the electromagnet, the valve member is moved by the spring into a normally open or normally closed position.

Poppet valves have several advantages. Poppet valves can accommodate high flow rates. Poppet valves can accommodate varying flow rates. Poppet valves can form a highly reliable seal, even in the presence of moisture, dirt, debris, etc. Due to the benefits that poppet valves provide, they are very popular for industrial applications, such as for controlling machinery and for metering fluids including liquids and gases.

Electromagnet poppet valves include an electromagnet that is electrically energized and de-energized in order to move the poppet and perform the valving function. Electromagnet poppet valves have fast response times. The electromagnet can generate high operating forces if properly designed. Electromagnet poppet valves can be computer controlled or remotely controlled, and therefore are well suited for industrial applications.

One increasingly common application is the use of electromagnet poppet valves in a valve island. A valve island is a grouping of multiple valves that are used to meter and/or control the flow of fluids. Advantageously, the individual valve units of the valve island can be added and removed as desired and the numbers of valves can be selected and changed. In addition, valves of different types or having different operating characteristics can be selected and installed on the valve island.

A valve island is commonly used to provide and control multiple fluid streams to a common device or for a common purpose. For example, in the pharmaceutical industry, multiple valves may be used to meter out compounds that are mixed in order to form a final compound. Another use of a valve island is in metering fluids in biotech applications. Yet another use is a valve island for controlling the delivery of pressurized gases in an industrial setting.

In the prior art, there has been a movement to smaller and smaller electromagnet poppet valves. Smaller electromagnet poppet valves enable a higher valve unit density in a valve island, for example. However, a drawback of this miniaturization is that smaller electromagnets generate smaller closing forces, while smaller valve orifices pass smaller volumes of fluids.

Japan patent 51 082424 discloses a dual poppet valve that is actuated by a pivoting member. The pivoting member includes a central pivot pin and pivots to the left or to the right. The pivoting member therefore rotates about a mid-point, alternatingly opening and closing two poppets. The pivoting member is attached to a first poppet via a first poppet link that is pivotally connected to one end of the pivoting member. The pivoting member is attached to a second poppet via a second poppet link that is pivotally connected to the opposite end of the pivoting member. The first and second poppet links pull the poppets up and push the poppets down.

German patent DE 44 05 657 discloses a valve including a diaphragm 72 spaced away from two nozzles 38 and 40. The valve includes two actuating tappets 78 and 80, extending from and moved by an armature 28. The two actuating tappets 78 and 80 are rigid, elongate members that push regions of the diaphragm down to seal the nozzles.

### Summary of the Invention

A poppet valve is provided according to an embodiment of the invention. The poppet valve comprises an actuator including a pivoting armature comprising a first end and a second end. The pivoting armature pivots at the first end. The poppet valve further comprises a tension connector member connected to the pivoting armature away from the first end and a valve poppet connected to the tension connector member. The pivoting armature lifts the poppet valve away from a valve orifice via the tension connector member when the actuator is activated.

A poppet valve is provided according to an embodiment of the invention. The poppet valve comprises an actuator including a pivoting armature comprising a first end and a second end. The pivoting armature pivots at the first end. The poppet valve further comprises a tension connector member connected to the pivoting armature away from the first end and a valve poppet connected to the tension connector member. The pivoting armature lifts the valve poppet away from a valve orifice via the tension connector member when the actuator is activated. The poppet valve further comprises a single biasing device acting on the valve poppet substantially in opposition to the tension connector member.

A poppet valve is provided according to an embodiment of the invention. The poppet valve comprises an actuator including a pivoting armature comprising a first end and a second end. The pivoting armature pivots at the first end. The poppet valve further comprises a tension connector member connected to the pivoting armature away from the first end and a valve poppet connected to the tension connector member. The pivoting armature lifts the poppet valve away from a valve orifice via the tension connector member when the actuator is activated, wherein the armature moves in a pivoting motion while the tension connecting member and the valve poppet move in a translating motion.

### Aspects of the Invention

In one embodiment of the poppet valve, the armature moves in a pivoting motion while the tension connecting member and the valve poppet move in a translating motion.

In another embodiment of the poppet valve, the tension connector member is affixed to the valve poppet on a side opposite the valve orifice.

In yet another embodiment of the poppet valve, the valve orifice further comprises at least one non-symmetric valve orifice, with the at least one non-symmetric orifice including a length L_{O} that is greater than a width W_{O}.

In yet another embodiment of the poppet valve, the valve orifice further comprises an upper orifice and a lower orifice, with the valve poppet being urged into closing with the lower orifice in the absence of activation of the actuator and with the valve poppet being pulled into closing with the upper orifice when the actuator is activated.

In yet another embodiment of the poppet valve, the valve orifice further comprises an upper orifice, with the tension connector member passing through the upper orifice, and a lower orifice, with the valve poppet being urged into closing with the lower orifice in the absence of activation of the actuator and with the valve poppet being pulled into closing with the upper orifice when the actuator is activated.

In yet another embodiment of the poppet valve, the poppet valve further comprises a single biasing device acting on the valve poppet substantially in opposition to the tension connector member.

In yet another embodiment of the poppet valve, the tension connector member is connected to the pivoting armature at the second end.

In yet another embodiment of the poppet valve, the tension connector member is connected to the pivoting armature between the first end and the second end.

In yet another embodiment of the poppet valve, the tension connector member is connected to the pivoting armature at a predetermined position away from the first end in order to generate a predetermined displacement force in the tension connector member.

In yet another embodiment of the poppet valve, the tension connector member is connected to the pivoting armature at a predetermined position away from the first end in order to generate a predetermined displacement travel in the tension connector member.

### Description of the Drawings

The same reference number represents the same element on all drawings. It should be understood that the drawings are not necessarily to scale.
FIG. 1 shows a poppet valve according to an embodiment of the invention.
FIGS. 2A-2F show various configurations of a valve orifice of the poppet valve according to various embodiments of the invention.
FIG. 3 shows a multiple orifice arrangement according to an embodiment of the invention.
FIG. 4 is a cross-sectional view of the poppet valve according to an embodiment of the invention.
FIG. 5 is a cross-sectional view of the poppet valve according to an embodiment of the invention.
FIG. 6 is a cross-sectional view BB of the poppet valve of FIG. 5.
FIG. 7 is a cross-sectional view of the poppet valve according to an embodiment of the invention.
FIG. 8 is a cross-sectional view CC of the poppet valve of FIG. 7.
FIG. 9 is a cross-sectional view DD of the poppet valve of FIG. 8.

### Detailed Description of the Invention

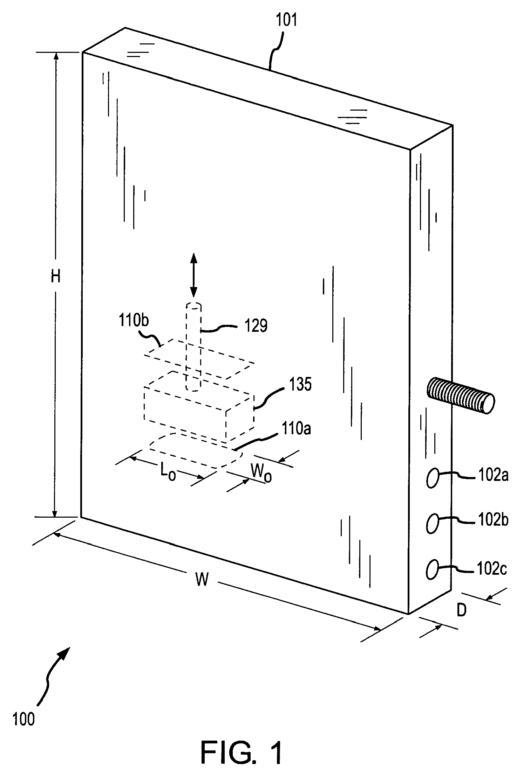

FIGS. 1-9 and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention. Those skilled in the art will appreciate that the features described below can be combined in various ways to form multiple variations of the invention. As a result, the invention is not limited to the specific examples described below, but only by the claims.

FIG. 1 shows a poppet valve 100 according to an embodiment of the invention. Components in common with other figures share reference numbers. The poppet valve 100 includes a valve body 101 and two or more ports 102 that conduct fluids, such as the ports 102a, 102b, and 102c in the figure. The fluids can include liquids and gases.

The valve body 101 has a substantially planar shape, including a height H, a width W, and a depth D. The poppet valve 100 in one embodiment is designed to comprise a modular valve, and therefore can be affixed to a base or valve island and therefore can be placed adjacent to similar valves. As a result, the depth D is desired to be kept at a minimum so that multiple such poppet valves 100 can be affixed to the common base. Consequently, the overall shape and size of the poppet valve 100 is of great importance.

One effect of this design consideration is that the orifice size of the valve is typically minimized in the prior art. Consequently, the overall flow rate of a prior art valve is therefore negatively impacted or at best limited by the orifice dimension.

The invention includes at least one orifice 110 within the valve body 101 and in communication with the two or more ports 102. In one embodiment, the at least one orifice 110 comprises a lower orifice 110a and an upper orifice 110b. However, in some embodiments the poppet valve 100 can include only one orifice 110.

The orifice 110 according to an embodiment of the invention can be non-symmetric and can have a length L_{O} that is greater than a width W_{O}. In some embodiments, the ratio of the orifice length L_{O} to the width W_{O} can comprise any value greater than one. As a consequence, the orifice 110 can conduct a greater flow volume than a symmetric orifice of the prior art.

The figure further shows a valve poppet 135. The valve poppet 135 can fit into an orifice 110 or can fit over an orifice 110 in a closed (*i.e.,* blocking) position. The valve poppet 135 is moved within the valve body 101 in order to substantially block or unblock one or both of the orifices 110a and 110b. For example, the valve poppet 135 can move to a substantially blocking position with regard to the orifice 110a and/or the orifice 110b, and can be configured to move away from the orifice 110a and/or the orifice 110b.

The valve poppet 135 is connected to a valve actuation member 129. The valve poppet 135 can be moved and actuated by the valve actuation member 129. The valve actuation member 129 can be coupled to any manner of activation mechanism.

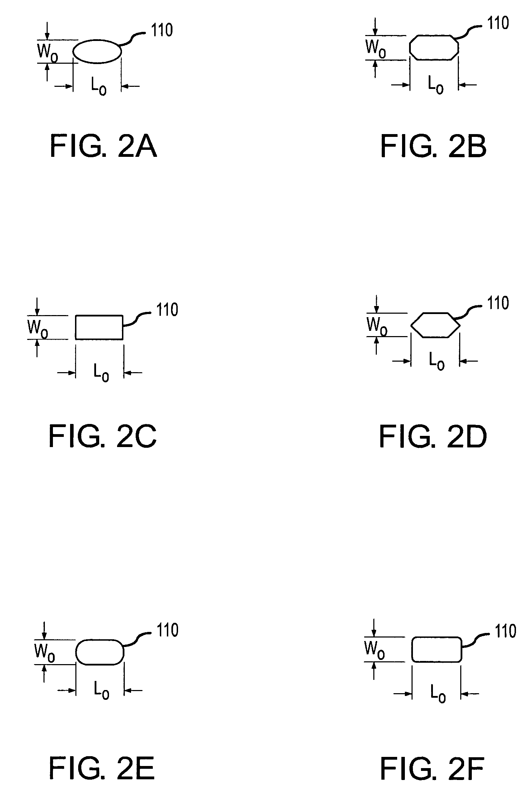

FIGS. 2A-2F show various configurations of a valve orifice 110 of the poppet valve 100 according to various embodiments of the invention. It should be understood that the orifice 110 can comprise one or both of the lower orifice 110a and/or the upper orifice 110b.

FIG. 2A shows a substantially oval orifice 110. FIG. 2B shows a substantially rectangular orifice 110 including angled end portions. FIG. 2C shows a substantially rectangular orifice 110. FIG. 2D shows a substantially parallel-sided orifice 110 including pointed ends. FIG. 2E shows a substantially parallel-sided orifice 110 including rounded ends. FIG. 2F shows a substantially rectangular orifice 110 including rounded corners. Alternatively, the orifice 110 can comprise various combinations of the above orifice shapes or can even comprise irregular shapes. In addition, other orifice shapes are contemplated and are within the scope of the description and claims.

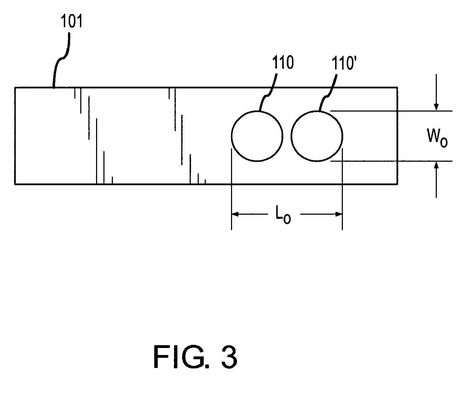

FIG. 3 shows a multiple orifice arrangement according to an embodiment of the invention. In this embodiment, the orifice arrangement comprises two or more orifices 110 and 110'. Two or more orifices 110 and 110' can be used in order to increase the aspect ratio of the orifice length L_{O} to the orifice width W_{O}. As a result, the orifice length LO is effectively greater than the orifice width WO, even where a single orifice 110 or 110' is substantially symmetric.

The orifices 110 and 110' in this embodiment can be substantially circular, as shown. Alternatively, the orifices 110 and 110' can comprise any other shape, including the shapes shown in FIGS. 2A-2F.

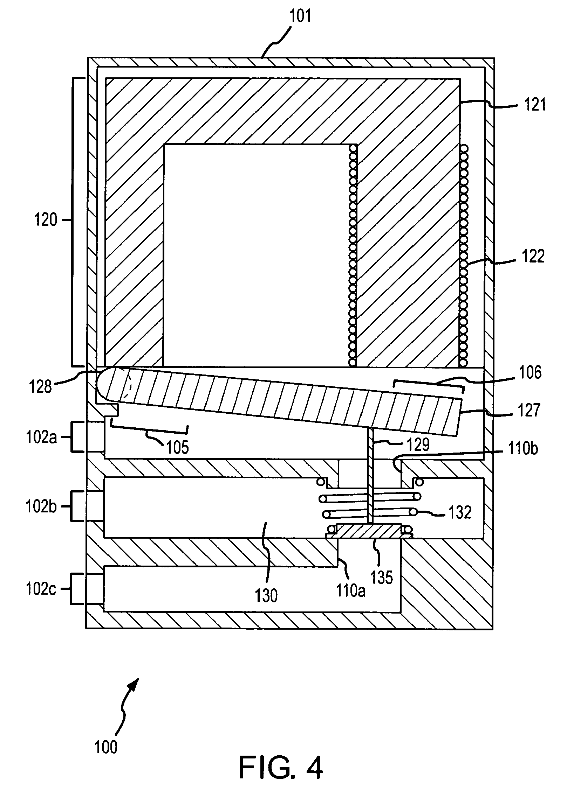

FIG. 4 is a cross-sectional view of the poppet valve 100 according to an embodiment of the invention. In the embodiment shown, the poppet valve 100 includes an actuator 120 and a pivoting armature 127 located below the actuator 120. The actuator 120 in the embodiment shown comprises an electromagnet including a core 121 and a coil 122 and the pivoting armature 127 is correspondingly formed of a magnetically attracted material, such as a ferrous material. However, it should be understood that other actuators can be employed in the poppet valve 100. The pivoting armature 127 includes a first end 105 and a second end 106 and a pivot member 128 at the first end 105. Consequently, the pivoting armature 127 pivots around the first end 105. However, it should be understood that alternatively the pivot location could be reversed in the figure and the pivot armature 127 would still function the same.

The pivot member 128 can comprise any member or device that enables the pivoting armature 127 to pivot. The pivot member 128 in one embodiment comprises a shaft or axle that is received by the valve body 101 of the poppet valve 100. In one embodiment, the pivot member 128 comprises an elastic component that maintains the pivot armature 127 substantially against the core 121.

The poppet valve 100 further includes the two or more ports 102, such as the first, second, and third ports 102a, 102b, and 102c in the embodiment shown. In one embodiment, the second port 102b comprises an inlet port, while the first and third ports 102a and 102c comprise outlet ports selected by activation of the poppet valve 100. The port 102b communicates with a poppet chamber 130. However, other configurations are contemplated and are within the scope of the description and claims.

The poppet valve 100 further includes the orifice 110. In the embodiment shown, the poppet valve 100 includes a lower orifice 110a and an upper orifice 110b. In the embodiment shown, the lower and upper orifices 110a and 110b communicate with the poppet chamber 130. However, it should be understood that alternatively the poppet valve 100 can include only the lower orifice 110a and two ports 102b and 102c. One or both of the upper orifice 110b and the lower orifice 110a can be substantially non-symmetric, as previously discussed. A non-symmetric valve orifice can include a length L_{O} that is greater than a width W_{O}. The upper orifice 110b communicates between the first port 102a and the second port 102b. The lower orifice 110a communicates between the second port 102b and the third port 102c.

The poppet valve 100 further includes a valve poppet 135 in the poppet chamber 130. The valve poppet 135 can move to selectively block either the lower orifice 110a or the upper orifice 110b. In one embodiment, the valve poppet 135 is urged into closing with the lower orifice 110a in the absence of activation of the actuator 120 and is pulled upward into closing with the upper orifice 110b when the actuator 120 is activated.

The valve poppet 135 is connected to the pivoting armature 127 by a tension connector member 129. The tension connector member 129 can be rigidly or pivotally attached to the pivoting armature 127. Any suitable attachment device or attachment configuration can be employed. In one embodiment, the tension connector member 129 is pivotally connected to the pivoting armature 127. Alternatively, the tension connector member can be fixedly connected to the pivoting armature 127, such as where the tension connector member 129 is at least partially flexible. For example, in this embodiment the tension connector member 129 can comprise a wire or thin strip.

The tension connector member 129 can be connected to the pivoting armature 127 at the second end 106 of the pivoting armature 127, for example. Alternatively, the tension connector member 129 can be connected to the pivoting armature 127 between the first end 105 and the second end 106. The tension connector member 129 can be connected at a predetermined position away from the first end 105 in order to generate a predetermined displacement force in the tension connector member 129. The tension connector member 129 can be connected at a predetermined position away from the first end 105 in order to generate a predetermined displacement travel. Therefore, the location of the attachment can be determined according to a lever arm calculation, wherein the location of the tension connector member attachment location is determined according to the required force multiplication and/or the required displacement travel.

Several different design aspects allow the poppet valve 100 to be designed with a predetermined displacement force and a predetermined displacement travel. The vertical position of the tension connector member 129 can be adjusted relative to the pivoting armature 127. In one embodiment, the vertical adjustment can be achieved by a press fitting for the tension connector member 129, for example. Other adjustment or coupling means for the tension connector member 129 are contemplated and are within the scope of the description and claims. In addition, the length of the tension connector member 129 can be varied as desired. Further, the pivoting armature 127 can be positioned a predetermined distance D from the actuator 20. The predetermined distance D can be varied as desired. One or more of these design factors can be varied in order to generate a predetermined displacement force and a predetermined displacement travel for the valve poppet 135.

The tension connector member 129 is subject to a tension force when the actuator 120 is activated, wherein the upward pivoting of the pivoting armature 127 places the tension force on the tension connector member 129. In addition, the biasing device 132 can contribute to the tension force on the tension connector member 129. The tension connector member 129 therefore lifts the valve poppet 135 away from the lower orifice 110a when the actuator 120 is activated. The tension connector member 129 does not transmit any compression force.

The tension connector member 129 comprises any device or member that is capable of transmitting pivoting motion of the pivoting armature 127 to the poppet valve 135 as a tension force. The tension connector member 129 can be substantially flexible or substantially rigid. The tension connector member 129 can be formed of any suitable material. Because the tension connector member 129 transmits a tension force, the tension connector member 129 in some embodiments does not have to be very heavy or rigid.

In contrast, in the prior art, a compression member is widely used for transmitting force from an armature to a poppet valve. Such a prior art compression member has to be relatively large and heavy in construction in order to prevent flexing, bending, or buckling while under a compression force. Any deformation of the prior art compression member will result in lesser travel of a prior art valve poppet and therefore will result in improper and/or incomplete actuation.

It should be noted from the figure that the tension connector member 129 resides in the upper orifice 110b but not in the lower orifice 110a. The tension connector member 129 therefore does not occupy any cross-sectional area of the lower orifice 110a and does not restrict the fluid flow through the lower orifice 110a. In addition, due to the nature of the tension connector member 129, the tension connector member 129 occupies a minimal cross-sectional area in the upper orifice 110b.

The poppet valve 100 further includes a biasing device 132 that extends between the valve poppet 135 and the upper orifice 110b. The biasing device 132 acts in opposition to the pivoting armature 127 and provides a biasing force that urges the valve poppet 135 to a closed position with respect to the lower orifice 110a. The actuator 120, when activated, generates a magnetic force on the pivoting armature 127 that is sufficient to overcome the biasing device 132 and sufficient to lift the valve poppet 135. The biasing device 132 can comprise any manner of biasing device, including helical devices, flat or bowed devices, etc.

When the actuator 120 is not activated, the actuator 120 does not generate any tension force. Therefore, because of the biasing force generated by the biasing device 132, the valve poppet 135 is force down into a closed position in the lower orifice 110a. As a result, the first port 102a is placed in communication with the second port 102b and the third port 102c is blocked.

When the actuator 120 is activated, the coil 122 and the core 121 form a magnetic circuit that place a magnetically attractive force on the pivoting armature 127. As a result, the pivoting armature 127 is pulled upward and consequently pivots in an upward direction. The resulting pivoting of the pivoting armature 127 places a tension force on the tension connector member 129, which in turn places a lifting force on the valve poppet 135. The lifting force overcomes the biasing force provided by the biasing device 132. Consequently, the valve poppet 135 moves up and away from the lower orifice 110a and into a closing position in the upper orifice 110b. As a result, the third port 102c is placed in communication with the second port 102b and the first port 102a is blocked.

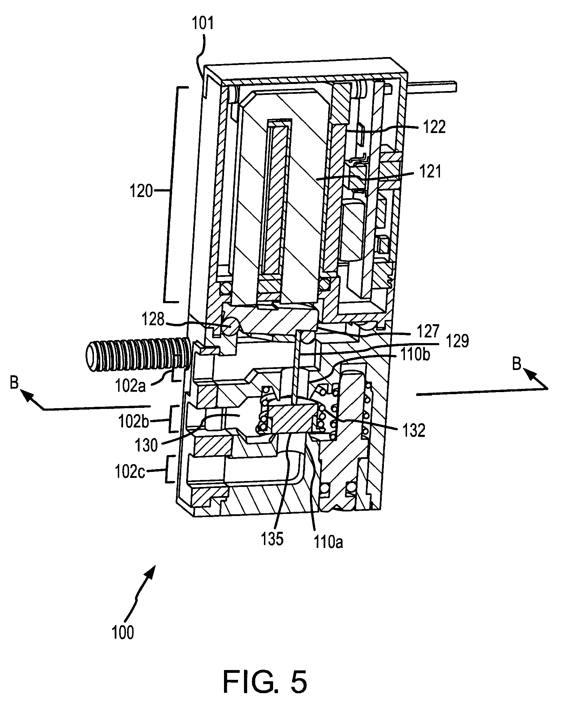

FIG. 5 is a cross-sectional view of the poppet valve 100 according to an embodiment of the invention. The tension connector member 129 is shown passing through the upper orifice 110b. The tension connector member 129 in this embodiment is substantially round in cross-section. However, other cross-sectional shapes are contemplated and are within the scope of the description and claims.

It can be seen from the figure than the tension connector member 129 is small and thin. It can be seen that the tension connector member 129 is small enough that it could not place a compression force on the valve poppet 135. The tension connector member 129 can be flexible or at least partially flexible. For example, the tension connector member 129 can comprise a wire or cable. Consequently, the poppet valve requires only the single biasing device 132. In addition, the tension connector member 129 is small enough that it occupies a minimal cross-sectional area of the upper orifice 110b.

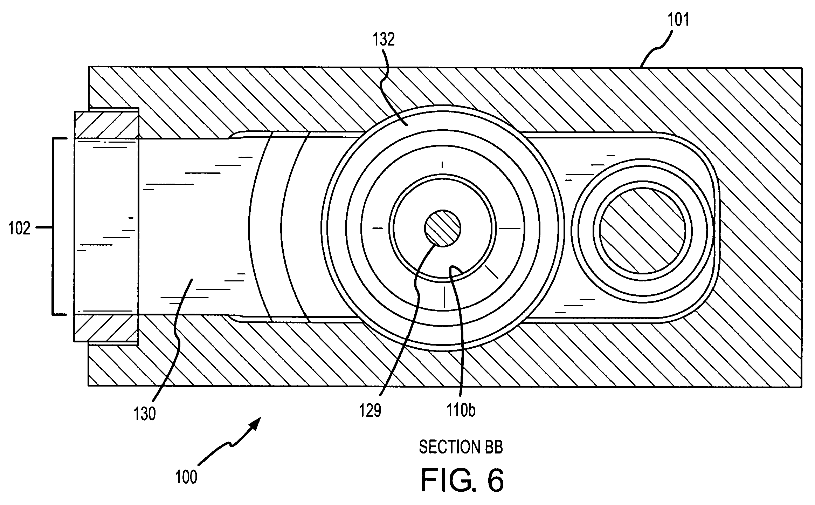

FIG. 6 is a cross-sectional view BB of the poppet valve 100 of FIG. 5. The cross-sectional view BB shows the size of the tension connector member 129 in relation to the upper orifice 110b. The tension connector member 129 in this embodiment is substantially circular in cross-section, as previously discussed.

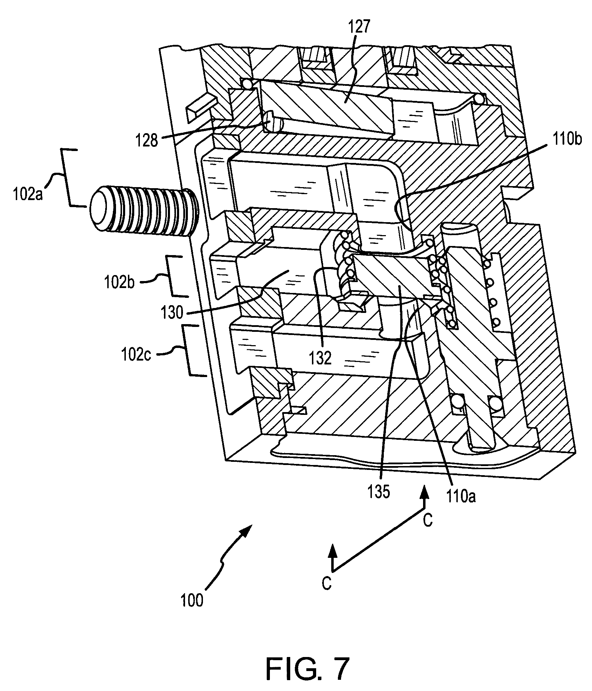

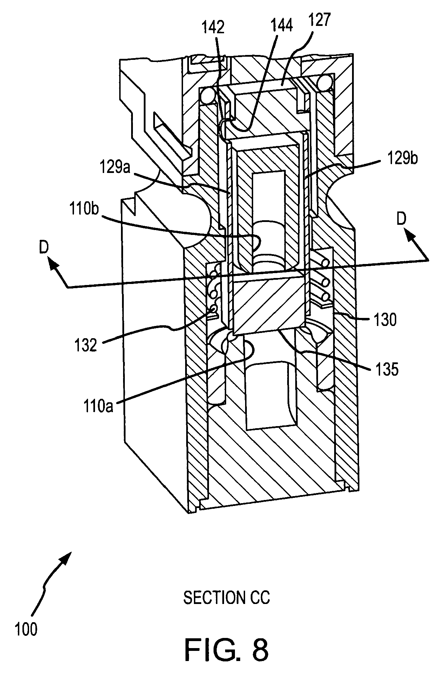

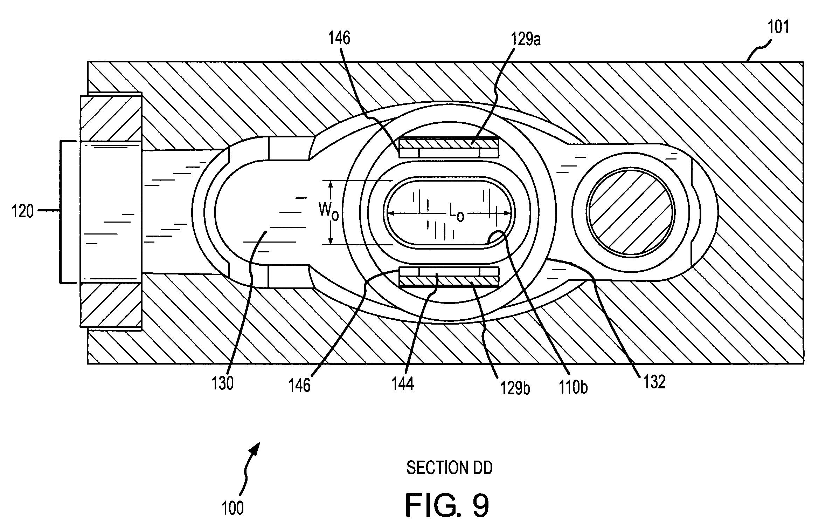

FIG. 7 is a cross-sectional view of the poppet valve 100 according to an embodiment of the invention. As before, the biasing device 132 places a tension force on the tension connector member 129, wherein the tension connector member 129 comprises two tension connector members 129a and 129b (not shown, see FIGS. 8 and 9). The two tension connector members 129a and 129b are offset from the center of the valve poppet 135.

In this embodiment, the upper orifice 110b is larger than the lower orifice 110a. In addition, the upper orifice 110b in the embodiment shown is not circular in shape (see FIG. 9).

FIG. 8 is a cross-sectional view CC of the poppet valve 100 of FIG. 7. In this embodiment, the tension connector member 129 comprises two substantially flat, thin strips 129a and 129b. The two tension connector members 129a and 129b can extend by the sides of the valve poppet 135. The two tension connector members 129a and 129b possess enough strength to pull the valve poppet 135 upward, against the biasing device 132. However, the tension connector members 129a and 129b do not possess enough rigidity to exert a compression force on the valve poppet 135. Therefore, the two tension connector members 129a and 129b can be at least partially flexible.

In the embodiment shown, the tension connector members 129a and 129b include apertures 142 and the pivot armature 127 includes corresponding projections 144. The tension connector members 129a and 129b therefore are pivotally attached to the pivoting armature 127.

FIG. 9 is a cross-sectional view DD of the poppet valve 100 of FIG. 8. This figure shows an upper orifice 110b that has two substantially parallel sides and rounded ends. The figure also shows the two tension connector members 129a and 129b passing through apertures 146 on either side of the upper orifice 110b. Consequently, the two tension connector members 129a and 129b in this embodiment do not occupy any cross-sectional space of the upper orifice 110b. Alternatively, the two tension connector members 129a and 129b can pass through the upper orifice 110b.

The poppet valve according to the invention can be employed according to any of the embodiments in order to provide several advantages, if desired. The invention provides a poppet valve that is compact in size. The invention provides a poppet valve that includes a large orifice size in a relatively small overall package. The invention provides a tension connector member that offers minimal orifice occupation. The invention provides a poppet valve that has a large valve opening force for its size.

## Claims

1. A poppet valve (100), comprising a valve poppet (135), with the poppet valve (100) being **characterized by**:
an actuator (120) including a pivoting armature (127) comprising a first end (105) and a second end (106), with the pivoting armature (127) pivoting at the first end (105);
a tension connector member (129) connected to the pivoting armature (127) away from the first end (105); and
the valve poppet (135) connected to the tension connector member (129), with the pivoting armature (127) lifting the valve poppet (135) away from a valve orifice (110) via the tension connector member (129) when the actuator (120) is activated.

2. A poppet valve (100), comprising a valve poppet (135), with the poppet valve (100) being **characterized by**:
an actuator (120) including a pivoting armature (127) comprising a first end (105) and a second end (106), with the pivoting armature (127) pivoting at the first end (105);
a tension connector member (129) connected to the pivoting armature (127) away from the first end (105);
the valve poppet (135) connected to the tension connector member (129), with the pivoting armature (127) lifting the valve poppet (135) away from a valve orifice (110) via the tension connector member (129) when the actuator (120) is activated; and
a single biasing device (132) acting on the valve poppet (135) substantially in opposition to the tension connector member (129).

3. The poppet valve (100) of claim 1 or claim 2, wherein the pivoting armature (127) moves in a pivoting motion while the tension connector member (129) and the valve poppet (135) move in a translating motion.

4. A poppet valve (100), comprising a valve poppet (135), with the poppet valve (100) being **characterized by**:
an actuator (120) including a pivoting armature (127) comprising a first end (105) and a second end (106), with the pivoting armature (127) pivoting at the first end (105);
a tension connector member (129) connected to the pivoting armature (127) away from the first end (105); and th
e valve poppet (135) connected to the tension connector member (129), with the pivoting armature (127) lifting the valve poppet (135) away from a valve orifice (110) via the tension connector member (129) when the actuator (120) is activated, wherein the pivoting armature (127) moves in a pivoting motion while the tension connector member (129) and the valve poppet (135) move in a translating motion.

5. The poppet valve (100) of claim 1 or claim 4, further comprising a single biasing device (132) acting on the valve poppet (135) substantially in opposition to the tension connector member (129).

6. The poppet valve (100) of any preceding claim, with the tension connector member (129) being affixed to the valve poppet (135) on a side opposite the valve orifice (110).

7. The poppet valve (100) of any preceding claim, with the valve orifice (110) further comprising at least one non-symmetric valve orifice (110), with the at least one non-symmetric valve orifice (110) including a length L_{O} that is greater than a width W_{O}.

8. The poppet valve (100) of any preceding claim, with the valve orifice (110) further comprising:
an upper orifice (110b); and
a lower orifice (110a), with the valve poppet (135) being urged into closing with the lower orifice (110a) in the absence of activation of the actuator (120) and with the valve poppet (135) being pulled into closing with the upper orifice (110b) when the actuator (120) is activated.

9. The poppet valve (100) of any preceding claim, with the valve orifice (110) further comprising:
an upper orifice (110b), with the tension connector member (129) passing through the upper orifice (110b); and
a lower orifice (110a), with the valve poppet (135) being urged into closing with the lower orifice (110a) in the absence of activation of the actuator (120) and with the valve poppet (135) being pulled into closing with the upper orifice (110b) when the actuator (120) is activated.

10. The poppet valve (100) of any preceding claim, with the tension connector member (129) being connected to the pivoting armature (127) at the second end (106).

11. The poppet valve (100) of any preceding claim, with the tension connector member (129) being connected to the pivoting armature (127) between the first end (105) and the second end (106).

12. The poppet valve (100) of any preceding claim, with the tension connector member (129) being connected to the pivoting armature (127) at a predetermined position away from the first end (105) in order to generate a predetermined displacement force in the tension connector member (129).

13. The poppet valve (100) of any preceding claim, with the tension connector member (129) being connected to the pivoting armature (127) at a predetermined position away from the first end (105) in order to generate a predetermined displacement travel in the tension connector member (129).

## Patentansprüche

1. Tellerventil (100) mit einem Ventilteller (135), wobei das Tellerventil (100) **gekennzeichnet ist durch**:
einen Aktuator (120), der einen schwenkbaren Anker (127) mit einem ersten Ende (105) und einem zweiten Ende (106) aufweist, wobei der schwenkbare Anker (127) an dem ersten Ende (105) verschwenkbar ist;
ein Zugverbindungselement (129), das von dem ersten Ende (105) entfernt mit dem schwenkbaren Anker (127) verbunden ist; und
wobei der Ventilteller (135) mit dem Zugverbindungselement (129) verbunden ist, wobei der schwenkbare Anker (127) den Ventilteller (135) mittels des Zugverbindungselements (129) von einer Ventilöffnung (110) weg anhebt, wenn der Aktuator (120) aktiviert wird.

2. Tellerventil (100) mit einem Ventilteller (135), wobei das Tellerventil (100) **gekennzeichnet ist durch**:
einen Aktuator (120), der einen schwenkbaren Anker (127) mit einem ersten Ende (105) und einem zweiten Ende (106) aufweist, wobei der schwenkbare Anker (127) an dem ersten Ende (105) verschwenkbar ist;
ein Zugverbindungselement (129), das von dem ersten Ende (105) entfernt mit dem schwenkbaren Anker (127) verbunden ist; und
wobei der Ventilteller (135) mit dem Zugverbindungselement (129) verbunden ist, wobei der schwenkbare Anker (127) den Ventilteller (135) mittels des Zugverbindungselements (129) von einer Ventilöffnung (110) weg anhebt, wenn der Aktuator (120) aktiviert wird; und
einer Einzelvorspannvorrichtung (132), die auf das Tellerventil (135) in zu dem Zugverbindungselement (129) im Wesentlichen entgegengesetzter Richtung wirkt.

3. Tellerventil nach Anspruch 1 oder Anspruch 2, bei welchem der verschwenkbare Anker (127) sich in einer Schwenkbewegung bewegt, während das Zugverbindungselement (129) und der Ventilteller (135) eine Translationsbewegung ausführen.

4. Tellerventil (100) mit einem Ventilteller (135), wobei das Tellerventil (100) **gekennzeichnet ist durch**:
einen Aktuator (120), der einen schwenkbaren Anker (127) mit einem ersten Ende (105) und einem zweiten Ende (106) aufweist, wobei der schwenkbare Anker (127) an dem ersten Ende (105) verschwenkbar ist;
ein Zugverbindungselement (129), das von dem ersten Ende (105) entfernt mit dem schwenkbaren Anker (127) verbunden ist; und
wobei der Ventilteller (135) mit dem Zugverbindungselement (129) verbunden ist, wobei der schwenkbare Anker (127) den Ventilteller (135) mittels des Zugverbindungselements (129) von einer Ventilöffnung (110) weg anhebt, wenn der Aktuator (120) aktiviert wird, wobei der verschwenkbare Anker (127) sich in einer Schwenkbewegung bewegt, während das Zugverbindungselement (129) und der Ventilteller (135) eine Translationsbewegung ausführen.

5. Tellerventil (100) nach Anspruch 1 oder Anspruch 4., ferner mit einer Einzelvorspannvorrichtung (132), die auf das Tellerventil (135) in zu dem Zugverbindungselement (129) im Wesentlichen entgegengesetzter Richtung wirkt.

6. Tellerventil (100) nach einem der vorhergehenden Ansprüche, bei welchem das Zugverbindungselement (129) an dem Ventilteller (135) auf einer der Ventilöffnung (110) entgegengesetzten Seite angeordnet ist.

7. Tellerventil (100) nach einem der vorhergehenden Ansprüche, bei welchem die Ventilöffnung (110) ferner mindestens eine nicht symmetrische Ventilöffnung (110) aufweist, wobei die mindestens eine nicht symmetrische Ventilöffnung (110) eine Länge L_{O} aufweist, die größer als eine Breite Wo ist.

8. Tellerventil (100) nach einem der vorhergehenden Ansprüche, wobei die Ventilöffnung (110) ferner aufweist:
eine obere Öffnung (110b); und
eine untere Öffnung (110a), wobei der Ventilteller (135) bei fehlender Aktivierung des Aktuators (120) in eine die untere Öffnung (110a) schließende Position gedrückt wird, und der Ventilteller (135) bei aktiviertem Aktuator (120) in eine die obere Öffnung (110b) schließende Position gezogen wird.

9. Tellerventil (100) nach einem der vorhergehenden Ansprüche, wobei die Ventilöffnung (110) ferner aufweist:
eine obere Öffnung (110b), wobei das Zugverbindungselement (129) durch die obere Öffnung (110b) hindurch erstreckt; und
eine untere Öffnung (110a), wobei der Ventilteller (135) bei fehlender Aktivierung des Aktuators (120) in eine die untere Öffnung (110a) schließende Position gedrückt wird, und der Ventilteller (135) bei aktiviertem Aktuator (120) in eine die obere Öffnung (110b) schließende Position gezogen wird.

10. Tellerventil (100) nach einem der vorhergehenden Ansprüche, wobei das Zugverbindungselement (129) mit dem schwenkbaren Anker (127) am zweiten Ende (106) verbunden ist.

11. Tellerventil (100) nach einem der vorhergehenden Ansprüche, wobei das Zugverbindungselement (129) mit dem schwenkbaren Anker (127) zwischen dem ersten Ende (105) und dem zweiten Ende (106) verbunden ist.

12. Tellerventil (100) nach einem der vorhergehenden Ansprüche, wobei das Zugverbindungselement (129) mit dem schwenkbaren Anker (127) an einer vorbestimmten Position von dem ersten Ende (105) entfernt verbunden ist, um eine vorbestimmte Bewegungskraft in dem Zugverbindungselement (129) zu erzeugen.

13. Tellerventil (100) nach einem der vorhergehenden Ansprüche, wobei das Zugverbindungselement (129) mit dem schwenkbaren Anker (127) an einer vorbestimmten Position von dem ersten Ende (105) entfernt verbunden ist, um einen vorbestimmten Bewegungsweg des Zugverbindungselements (129) zu erzeugen.

## Revendications

1. Soupape à champignon (100) comprenant un champignon de soupape (135) **caractérisée en ce qu'**elle comprend :
un actionneur (120) comprenant une armature pivotante (127) comprenant une première extrémité (105) et une seconde extrémité (106), l'armature pivotante (127) étant mobile en pivotement au niveau de sa première extrémité (105),
un élément connecteur de tension (129) relié à l'armature pivotante (127) à distance de la première extrémité (105), et
le champignon de soupape (135) étant relié à l'élément connecteur de tension (129), l'armature pivotante (127) levant le champignon de soupape (135) pour l'éloigner d'un orifice de soupape (110) par l'intermédiaire de l'élément connecteur de tension (129) lorsque l'actionneur (120) est activé.

2. Soupape à champignon (100) comprenant un champignon de soupape (135),
**caractérisée en ce qu'**elle comprend :
un actionneur (120) comprenant une armature pivotante (127) comprenant une première extrémité (105) et une seconde extrémité (106), l'armature pivotante (127) pouvant pivoter au niveau de sa première extrémité (105),
un élément connecteur de tension (129) relié à l'armature pivotante (127) à distance de la première extrémité (105),
le champignon de soupape (135) étant relié à l'élément connecteur de tension (129), l'armature pivotante (127) levant le champignon de soupape (135) pour l'éloigner d'un orifice de soupape (110) par l'intermédiaire de l'élément connecteur de tension (129) lorsque l'actionneur (120) est activé, et
un dispositif de rappel unique (132) agissant sur le champignon de soupape (135) essentiellement de manière opposée à l'élément connecteur de tension (129).

3. Soupape à champignon (100) conforme à la revendication 1 ou 2, dans laquelle l'armature pivotante (127) se déplace selon un mouvement de pivotement tandis que l'élément connecteur de tension (129) et le champignon de soupape (135) se déplacent selon un mouvement de translation.

4. Soupape à champignon (100) comprenant un champignon de soupape (135),
**caractérisé en ce qu'**elle comprend :
un actionneur (120) comprenant une armature pivotante (127) comprenant une première extrémité (105) et une seconde extrémité (106), l'armature pivotante (127) étant susceptible de pivoter au niveau de sa première extrémité (105),
un élément connecteur de tension (129) relié à l'armature pivotante (127) à distance de la première extrémité (105), et
le champignon de soupape (135) étant relié à l'élément connecteur de tension (129), l'armature pivotante (127) levant le champignon de soupape (135) pour l'éloigner d'un orifice de soupape (110) par l'intermédiaire de l'élément connecteur de tension (129) lorsque l'actionneur (120) est activé, l'armature pivotante (127) se déplaçant selon un mouvement de pivotement alors que l'élément connecteur de tension (129) et le champignon de soupape (135) se déplacent selon un mouvement de translation.

5. Soupape à champignon (100) conforme à la revendication 1 ou à la revendication 4, comprenant en outre un dispositif de rappel unique (132) agissant sur le champignon de soupape (135) essentiellement de manière opposée à l'élément connecteur de tension (129).

6. Soupape à champignon (100) conforme à l'une quelconque des revendications précédentes, dans laquelle l'élément connecteur de tension (129) est fixé au champignon de soupape (135) sur un côté opposé à l'orifice de soupape (110).

7. Soupape à champignon (100) conforme à l'une quelconque des revendications précédentes, dans laquelle l'orifice de soupape (110) comprend en outre au moins un orifice de soupape non symétrique (110), cet orifice de soupape non symétrique (110) ayant une longueur Lo supérieure à sa largeur Wo.

8. Soupape à champignon (100) conforme à l'une quelconque des revendications précédentes, dans laquelle l'orifice de soupape (110) comprend en outre :
un orifice supérieur (110b), et
un orifice inférieur (110a), le champignon de soupape (135) étant rappelé dans le sens de la fermeture de l'orifice inférieur (110a) en l'absence d'activation de l'actionneur (120), et le champignon de soupape (135) étant rappelé dans le sens de fermeture de l'orifice supérieur (110b) lorsque l'actionneur (120) est activé.

9. Soupape à champignon (100) conforme à l'une quelconque des revendications précédentes, dans laquelle l'orifice de soupape (110) comprend en outre :
un orifice supérieur (110b), l'élément connecteur de tension (129) passant au travers de cet orifice supérieur (110b), et
un orifice inférieur (110a), le champignon de soupape (135) étant rappelé dans le sens de la fermeture de l'orifice inférieur (110a) en l'absence d'activation de l'actionneur (120) et le champignon de soupape (135) étant rappelé dans le sens de la fermeture de l'orifice supérieur (110b) lorsque l'actionneur (120) est activé.

10. Soupape à champignon (100) conforme à l'une quelconque des revendications précédentes, dans laquelle l'élément connecteur de tension (129) est relié à l'armature pivotante (127) au niveau de la seconde extrémité (106).

11. Soupape à champignon (100) conforme à l'une quelconque des revendications précédentes, dans laquelle l'élément connecteur de tension (129) est relié à l'armature pivotante (127) entre la première extrémité (105) et la seconde extrémité (106).

12. Soupape à champignon (100) conforme à l'une quelconque des revendications précédentes, dans laquelle l'élément connecteur de tension (129) est relié à l'armature pivotante (127) au niveau d'une position prédéfinie écartée de la première extrémité (105) pour créer une force de déplacement prédéfinie dans l'élément connecteur de tension (129).

13. Soupape à champignon (100) conforme à l'une quelconque des revendications précédentes, dans laquelle l'élément connecteur de tension (129) est relié à l'armature pivotante (127) au niveau d'une position prédéfinie écartée de la première extrémité (105) pour créer un mouvement de déplacement prédéfini dans l'élément connecteur de tension (129).
